# EUROPEAN PATENT SPECIFICATION

(11) **EP 3 860 118 B1**
(45) Date of publication and mention of the grant of the patent: **16.11.2022**
(21) Application number: 21151357.7
(22) Date of filing: 13.01.2021
(51) Int. Cl.: H04N 7/18

(54) **GATEWAY DEVICE, GATEWAY PROGRAM, COMPUTER-READABLE RECORDING MEDIUM WITH GATEWAY PROGRAM RECORDED THEREON, AND METHOD OF TRANSFERRING CAMERA IMAGE**
GATEWAY-VORRICHTUNG, GATEWAY-PROGRAMM, COMPUTERLESBARES AUFZEICHNUNGSMEDIUM MIT DARAUF AUFGEZEICHNETEM GATEWAY-PROGRAMM UND VERFAHREN ZUR ÜBERTRAGUNG EINES KAMERABILDES
DISPOSITIF PASSERELLE, PROGRAMME PASSERELLE, SUPPORT D'ENREGISTREMENT LISIBLE SUR ORDINATEUR SUR LEQUEL EST ENREGISTRÉ LE PROGRAMME DE PASSERELLE ET PROCÉDÉ DE TRANSFERT D'IMAGE DE CAMÉRA

(30) Priority: 28.01.2020 JP 2020011934
(43) Date of publication of application: 04.08.2021
(73) Proprietor: Ciao Inc., Tokyo 1050013 (JP)
(72) Inventor: NITTA, Tomoaki, Tokyo 1120011 (JP); WATAHIKI, Ryuichi, Tokyo 1080073 (JP)
(74) Representative: Winter, Brandl - Partnerschaft mbB

(56) References cited:
- WO-A1-2019/225477
- KR-A- 20160 006 531
- US-A1- 2005 271 251
- US-A1- 2012 169 923
- US-A1- 2017 257 659
- ANDREW D BAGDANOV ET AL: "Adaptive Video Compression for Video Surveillance Applications", MULTIMEDIA (ISM), 2011 IEEE INTERNATIONAL SYMPOSIUM ON, IEEE, 5 December 2011 (2011-12-05), pages 190-197, XP032090726, DOI: 10.1109/ISM.2011.38 ISBN: 978-1-4577-2015-4

## Description

### BACKGROUND OF THE INVENTION

### Field of the Invention

The present invention relates to a gateway device configured to transfer a camera image to a cloud storage, a gateway program and a computer-readable recording medium with the gateway program recorded thereon, and a method of transferring a camera image.

### Description of the Related Art

A camera system has been known (for example, see JP 2019 - 165 319 A) which includes a plurality of cameras connected to a plurality of bases, respectively, base servers installed at the bases and connected with the cameras of the bases, respectively, and a cloud server connected to the base servers via telecommunication lines to synthesize and store moving image data from image data to be transferred to the cloud server from the respective base servers. In such a camera system, a large number of cameras can be installed at the plurality of bases, and the cameras can be collectively managed by the cloud server, thereby the spread of cameras for crime prevention and surveillance is expected to be further progressed.

However, as the spread of cameras for crime prevention and surveillance progresses as described above, the amount of moving image data stored in the cloud server continues to increase. Therefore, a large amount of storage capacity in the cloud server is taken up, and thus management costs increase.

In this respect, US 2012 / 0 169 923 A1 discloses a transmission system including a processor configured to receive a plurality of frames, to analyze the plurality of frames and to identify foreground-object portions and background portions. The processor is further configured to transmit the foreground-object information for each of the plurality of frames and to selectively transmit background information for less than all of the plurality of frames at a periodic rate. A drawback of this technique is that the processor of the transmission system has to provide a high processing capacity.

Therefore, the present invention is to provide a gateway device, a program (also referred to as gateway program), a computer-readable recording medium with the gateway program recorded thereon, and a method of transferring a camera image which are capable of efficiently compressing moving image data according to contents and saving the storage capacity for preserving the moving image data. Starting from US 2012 / 0 169 923, it is a further object of the present invention to provide a gateway device, a gateway program, a computer-readable recording medium with the gateway program recorded thereon, and a method of transferring a camera image which require less processing capacity for efficiently compressing moving image data according to contents and saving the storage capacity for preserving the moving image data.

These objects are solved by the gateway device according to claim 1, the program according to claim 5, the computer-readable recording medium according to claim 6 and the method according to claim 7. Preferred embodiments are subject matter of the dependent claims.

### SUMMARY OF THE INVENTION

A gateway device of the present invention is a gateway device to which a camera device is connected, the gateway device including: a snapshot unit configured to acquire still image data at predetermined intervals from moving image data input from the camera device; a motion detection unit configured to detect a presence or absence of a motion, by difference extraction, from the still image data acquired by the snapshot unit; a data processing unit configured not to perform compression on the moving image data when the motion detection unit detects that the motion is present, but to perform compression on the moving image data when the motion detection unit detects that the motion is absent; and a data transfer unit configured to transfer the moving image data to a cloud storage.

A method of transferring a camera image by a computer connected with a camera device of the present invention includes: acquiring still image data at predetermined intervals from moving image data input from the camera device; detecting a presence or absence of a motion, by difference extraction, from the still image data; not performing compression on the moving image data when it is detected that the motion is present, but performing compression on the moving image data when it is detected that the motion is absent; and transferring the moving image data to a cloud storage.

According to such the invention, the still image data is acquired at predetermined intervals from the moving image data input from the camera device, the presence or absence of the motion is detected from the acquired still image data by difference extraction, and the moving image data is transferred to the cloud storage without being compressed and a raw high-quality camera image is preserved in the cloud storage when it is detected that the motion is present. On the other hand, when it is detected that the motion is absent, the moving image data is compressed and transferred to the cloud server, and a size-saving camera image is preserved in the cloud storage.

Preferably, the gateway device of the present invention may include a plurality of capture units configured to alternately capture moving image data for a predetermined time from the moving image data input from the camera device and to send the captured moving image data to the data processing unit. Therefore, when the moving image data is captured by the capture unit and then sent to the data processing unit, the moving image data can be continuously captured in parallel by another capture unit, so that no blank time occurs between the moving image data to be sent to the data processing unit.

Preferably, the gateway device of the present invention may include a temporary storage unit configured to temporarily store the moving image data, and the data transfer unit may be configured to store the moving image data in the temporary storage unit when the moving image data cannot be transferred to the cloud storage and to transfer the moving image data stored in the temporary storage unit to the cloud storage when it becomes possible to transfer the moving image data to the cloud storage. Therefore, even when the moving image data cannot be transferred to the cloud storage due to occurrence of a communication failure or the like, the moving image data is temporarily stored in the gateway device and is transferred again, so that the moving image data with no blank time can be preserved in the cloud storage.

Preferably, the data transfer unit may be configured to store the moving image data in the temporary storage unit by compressing the moving image data. Therefore, when the moving image data cannot be transferred to the cloud storage due to the occurrence of the communication failure or the like, the moving image data can be compressed and temporarily stored as a size saving, so that the temporary storage period can be extended and can also cope with a case where the moving image data cannot be transferred to the cloud storage for a long time.

A gateway program of the present invention causes a computer connected with a camera device to function as: a snapshot unit configured to acquire still image data at predetermined intervals from moving image data input from the camera device; a motion detection unit configured to detect a presence or absence of a motion, by difference extraction, from the still image data acquired by the snapshot unit; a data processing unit configured not to perform compression on the moving image data when the motion detection unit detects that the motion is present, but to perform compression on the moving image data when the motion detection unit detects that the motion is absent; and a data transfer unit configured to transfer the moving image data to a cloud storage. According to the computer that executes the program, the same operation and effect as the gateway device of the present invention can be obtained.
(1) With the configuration in which the still image data is acquired at predetermined intervals from the moving image data input from the camera device, the presence or absence of the motion is detected from the acquired still image data by difference extraction, the moving image data is transferred to the cloud storage without being compressed when it is detected that the motion is present, and the moving image data is compressed and transferred to the cloud storage when it is detected that the motion is absent, a size-saving camera image is preserved in the cloud storage, the raw high-quality camera image is preserved in the cloud storage without being compressed in a case of image data containing the motion and the raw high-quality camera image is preserved in the cloud storage in a state of being compressed in a case of image data not containing the motion, so that it is possible to efficiently compress the moving image data according to contents and to save the storage capacity for preserving the moving image data.
(2) With the configuration including the plurality capture units configured to alternately capture the moving image data for a predetermined time from the moving image data input from the camera device and to send the captured moving image data to the data processing unit, no blank time occurs between the moving image data to be sent to the data processing unit, and continuous camera images can be preserved in the cloud storage.
(3) With the configuration in which the moving image data is stored in the temporary storage unit when the moving image data cannot be transferred to the cloud storage and the moving image data stored in the temporary storage unit is transferred to the cloud storage when it becomes possible to transfer the moving image data to the cloud storage, even when the moving image data cannot be transferred to the cloud storage due to the occurrence of the communication failure or the like, continuous camera images with no blank time can be preserved in the cloud storage.
(4) With the configuration in which the moving image data is stored in the temporary storage unit by being compressed, it is possible to extend a period during which the moving image data can be temporarily stored when cannot be transferred to the cloud storage due to the occurrence of the communication failure or the like and to preserve continuous camera images with no blank time in the cloud storage even when the moving image data cannot be transferred to the cloud storage for a long time.

### BRIEF DESCRIPTION OF THE DRAWINGS

FIG. 1 is a schematic configuration diagram of a gateway device according to an embodiment of the present invention;
FIG. 2 is a block diagram of the gateway device shown in FIG. 1;
FIG. 3 is an explanatory view of a detection range and a detection size;
FIG. 4A is an explanatory view showing an example of motion detection; and
FIG. 4B is an explanatory view showing another example of motion detection.

### DETAILED DESCRIPTION OF THE PREFERRED EMBODIMENT

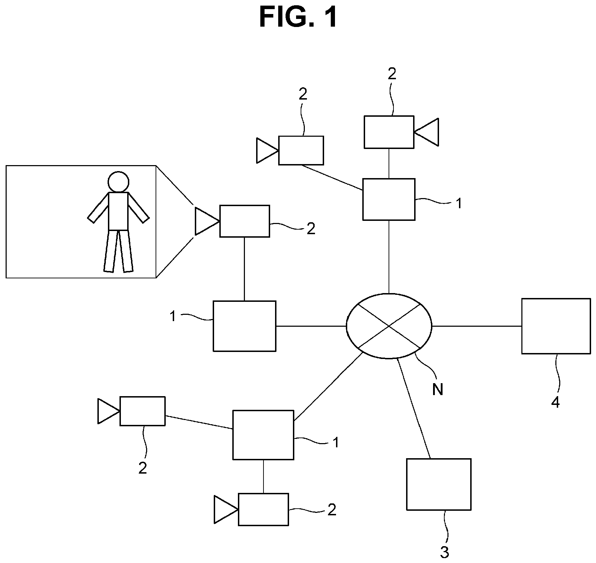

FIG. 1 is a schematic configuration diagram of a gateway device according to an embodiment of the present invention.

In FIG. 1, a gateway device 1 according to the embodiment of the present invention is used to transfer a camera image of a camera device 2 to a cloud storage 3. One or more camera devices 2 are connected to each of the gateway devices 1. The gateway device 1 and the cloud storage 3 are connected to each other by an information communication network N such as the Internet. As the cloud storage 3, for example, AWS (Amazon Web Services) manufactured by Amazon Inc. can be used.

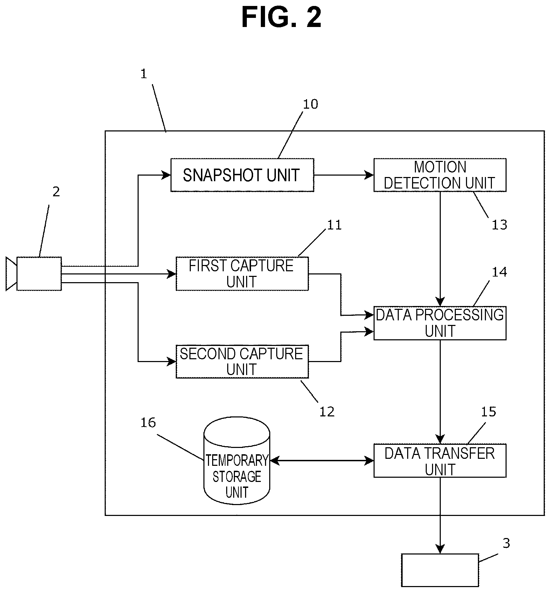

FIG. 2 is a block diagram of the gateway device shown in FIG. 1.

As shown in FIG. 2, the gateway device 1 includes a snapshot unit 10 configured to acquire still image data at predetermined intervals from moving image data input from the camera device 2, a first capture unit 11 and a second capture unit 12 configured to capture moving image data for a predetermined time from the moving image data input from the camera device 2, a motion detection unit 13 configured to detect the presence or absence of a motion from the still image data acquired by the snapshot unit 10, a data processing unit 14 configured to compress the moving image data based on the motion detection result by the motion detection unit 13, a data transfer unit 15 configured to transfer the moving image data to the cloud storage 3, and a temporary storage unit 16 configured to temporarily store the moving image data.

The gateway device 1 can also be realized by causing a computer to execute a gateway program for functioning as each of the units 10 to 16. In addition, the computer can read and execute a gateway program recorded on a computer-readable recording medium.

The snapshot unit 10 acquires still image data at predetermined intervals (S-second intervals, for example, 1-second intervals) from moving image data input from the camera device 2. The motion detection unit 13 detects the presence or absence of motion, by difference extraction, from the still image data acquired by the snapshot unit 10. For example, the motion detection unit 13 detects that the motion is present when at least one of pixel blocks, in which there is a difference between images of the still image data sequentially acquired by the snapshot unit 10, is within a detection range and is equal to or larger than a detection size.

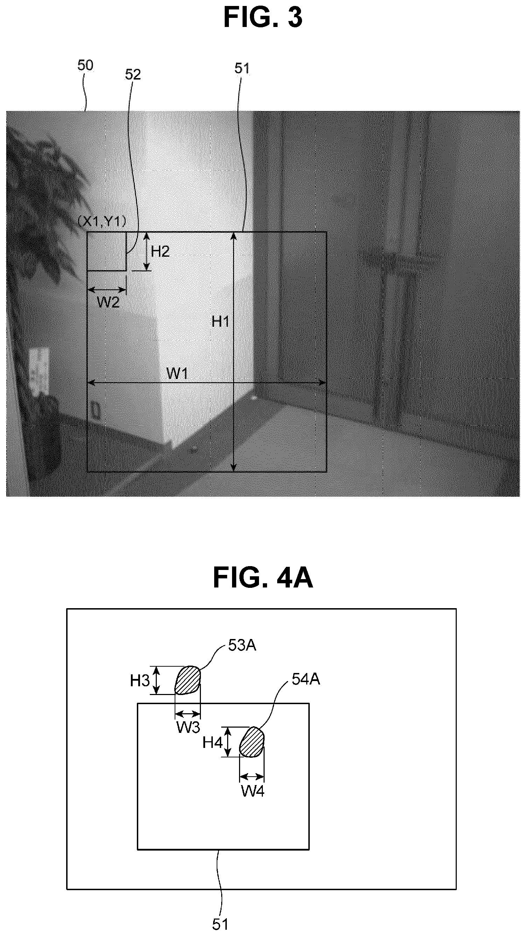

As shown in FIG. 3, a detection range 51 is a range in which motion detection is performed within a frame 50 of an image of the moving image data input from the camera device 2. The detection range 51 is designated in advance by a position (coordinates (X1, Y1) of s corner of a reference frame), a width W1, and a height H1 of a rectangular frame in the frame 50. The detection range 51 can be the entire frame 50. Further, the detection range 51 can have any shape other than the rectangle shown in FIG. 3. For example, a circular shape or a polygonal shape can be used depending on an object to be detected.

As shown in FIG. 3, the detection size is designated in advance by a width W2 and a height H2 of a rectangular frame 52 in the frame 50 of the image of the moving image data input from the camera device 2. As the detection size, a frame having any shape can be adopted in addition to the rectangular frame 52. For example, the frame 52 may have a circular shape, and the detection size may also be designated by a center point and a radius.

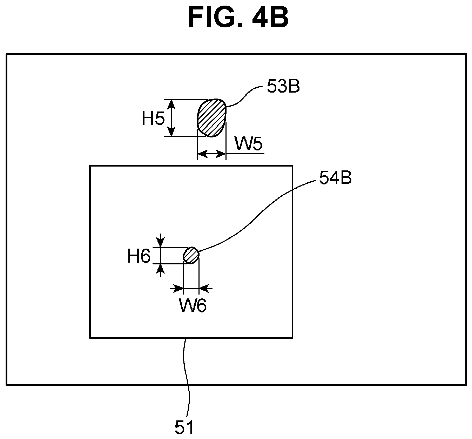

An example of motion detection by the motion detection unit 13 will be described below with reference to FIGS. 4A and 4B. For example, when the image differentially extracted from the still image data acquired by the snapshot unit 10 is as shown in FIG. 4A, the motion detection unit 13 determines that the motion is present when, out of pixel blocks 53A and 54A in which a difference occurs, the block 53A equal to or larger than the detection size (W3 ≥ W2 or H3 ≥ H2) is outside the detection range 51 but the block 54A equal to or larger than the detection size (W4 ≥ W2 or H4 ≥ H2) is within the detection range 51.

On the other hand, as shown in FIG. 4B, when, out of pixel blocks 53B and 54B in which a difference occurs, the block 53B equal to or larger than the detection size (W5 ≥ W2 or H5 ≥ H2) is outside the detection range 51 and the block 54B smaller than the detection size (W6 < W2 or H6 < H2) is within the detection range 51, the motion detection unit 13 determines that the motion is absent. Regarding determination conditions, it is also possible to determine to be equal to or larger than the detection size when both the width and the height of the pixel block are equal to or larger than the width W2 and the height H2 of the rectangular frame 52.

In addition, the motion detection unit 13 can also be configured to determine that the motion is present only when at least one of the pixel blocks, in which a difference occurs between the images of the still image data sequentially acquired by the snapshot unit 10, is within the detection range and is continuously equal to or larger than the detection size for a predetermined time (the predetermined number of images of the still image data acquired at a predetermined interval (S-second interval) within a predetermined time). Thus, even when noise momentarily occurs in the entire image of the moving image data input from the camera device 2, it cannot be also determined that the motion is present unless such a state occurs continuously for a predetermined time or longer.

The first capture unit 11 and the second capture unit 12 alternately capture moving image data for a predetermined time (C minutes, for example, one minute) from the moving image data input from the camera device 2 and send the captured moving image data to the data processing unit 14. In other words, the moving image data input from the camera device 2 is alternately and sequentially captured by the first capture unit 11 and the second capture unit 12 every predetermined time (C minutes) and is sent to the data processing unit 14. For example, when the first capture unit 11 captures the moving image data and then sends the captured moving image data to the data processing unit 14, the second capture unit 12 continues to capture the moving image data in parallel. On the contrary, when the second capture unit 12 captures the moving image data and then sends the captured moving image data to the data processing unit 14, the first capture unit 11 continues to capture the moving image data in parallel.

The data processing unit 14 does not perform compression on the moving image data when the motion detection unit 13 detects that the motion is present, but performs compression on the moving image data when the motion detection unit 13 detects that the motion is absent. Note that "compression" refers to a process of reducing the capacity of moving image data (reducing the size) by frame rate conversion or quality adjustment, for example. Such compression processing can be performed alone or in combination.

The data transfer unit 15 transfers the moving image data processed by the data processing unit 14 to the cloud storage 3. At this time, the data transfer unit 15 stores the moving image data in the temporary storage unit 16 when cannot transfer the moving image data to the cloud storage 3, and transfers the moving image data stored in the temporary storage unit 16 to the cloud storage 3 when it becomes possible to transfer the moving image data to the cloud storage 3. The data transfer unit 15 can store the moving image data in the temporary storage unit 16 by compressing the moving image data.

Further, the data transfer unit 15 records, in association with each moving image data to be transferred to the cloud storage 3, information for specifying the camera device 2 by which each moving image data is photographed, a photographing date and time, a file name, and information on a motion detection result by the motion detection unit 13 in a database on the cloud storage 3.

In the gateway device 1 having the configuration described above, the snapshot unit 10 acquires the still image data at S-second intervals from the moving image data input from the camera device 2, and the motion detection unit 13 detects the presence or absence of the motion from the acquired still image data. Concurrently, the first capture unit 11 and the second capture unit 12 alternately capture the moving image data at C-minute intervals from the moving image data input from the camera device 2.

Then, when the motion detection unit 13 detects that the motion is absent, the captured moving image data is compressed depending on frame rate conversion and quality adjustment by the data processing unit 14, and is transferred to the cloud storage 3 by the data transfer unit 15. On the other hand, when the motion detection unit 13 detects that the motion is present, the captured moving image data is not compressed by the data processing unit 14, and is transferred to the cloud storage 3 by the data transfer unit 15. In addition, the data transfer unit 15 records, in association with each moving image data to be transferred to the cloud storage 3, information for specifying the camera device 2 by which each moving image data is photographed, a photographing date and time, a file name, and information on the motion detection result by the motion detection unit 13 in the database on the cloud storage 3.

When the data transfer unit 15 cannot transfer the moving image data to the cloud storage 3 due to the occurrence of a communication failure or the like, the data transfer unit 15 stores the moving image data in the temporary storage unit 16. At this time, the data transfer unit 15 stores the moving image data in the temporary storage unit 16 by compressing the moving image data. Then, the data transfer unit 15 transfers the moving image data stored in the temporary storage unit 16 to the cloud storage 3 when it becomes possible to transfer the moving image data to the cloud storage 3.

As described above, according to the gateway device 1 of the present embodiment, the still image data is acquired at predetermined intervals from the moving image data input from the camera device 2, the presence or absence of the motion is detected from the acquired still image data by difference extraction, and the moving image data is not compressed and the raw high-quality camera image is preserved in the cloud storage when it is detected that the motion is present. On the other hand, when it is detected that the motion is absent, the moving image data is compressed and the size-saving camera image is preserved in the cloud storage 3.

In other words, according to the gateway device 1 of the present embodiment, since the moving image data is efficiently compressed according to the presence or absence of the motion and is transferred to the cloud storage 3, it is possible to save the storage capacity of the cloud storage 3 for preserving the moving image data. By a request from a computer 4 connected to the cloud storage 3 via the telecommunication network N, the moving image data preserved in the cloud storage 3 is provided from the cloud storage 3 to the computer 4. The computer 4 can search and acquire desired moving image data from the information for specifying the camera device 2 by which each moving image data is photographed, the photographing date and time, the file name, and the information on the motion detection result or the like by the motion detection unit 13 which are recorded in the database on the cloud storage 3, and can play the desired moving image data back.

In the gateway device 1, since the moving image data for a predetermined time from the moving image data input from the camera device 2 is alternately captured by the first capture unit 11 and the second capture unit 12 and is sent to the data processing unit 14, no blank time occurs between the moving image data to be sent to the data processing unit 14, and continuous camera images can be preserved in the cloud storage.

In the gateway device 1, since the moving image data is stored in the temporary storage unit 16 when the moving image data cannot be transferred to the cloud storage 3 and the moving image data stored in the temporary storage unit 16 is transferred to the cloud storage 3 when it becomes possible to transfer the moving image data to the cloud storage 3, even when the moving image data cannot be transferred to the cloud storage 3 due to the occurrence of the communication failure or the like, continuous camera images with no blank time can be preserved in the cloud storage 3.

In addition, since the moving image data is stored in the temporary storage unit by being compressed, it is possible to extend a period during which the moving image data can be temporarily stored when cannot be transferred to the cloud storage 3 due to the occurrence of the communication failure or the like and to preserve continuous camera images with no blank time in the cloud storage 3 even when the moving image data cannot be transferred to the cloud storage 3 for a long time.

The gateway device, the gateway program, the computer-readable recording medium with the gateway program recorded thereon, and the method of transferring a camera image according to the present invention are useful as a device configured to preserve the camera image in the cloud storage, a program, a computer-readable recording medium with the program recorded thereon, and a method.

### Reference Signs List

- 1: gateway device
- 2: camera device
- 3: cloud storage
- 4: computer
- 10: snapshot unit
- 11: first capture unit
- 12: second capture unit
- 13: motion detection unit
- 14: data processing unit
- 15: data transfer unit
- 16: temporary storage unit

## Claims

1. A gateway device (1) connectable with a camera device (2), comprising:
a snapshot unit (10) configured to acquire still image data at predetermined intervals from moving image data input from the camera device (2);
a motion detection unit (13) configured to detect a presence or absence of a motion, by difference extraction, from the still image data acquired by the snapshot unit (10);
a data processing unit (14) configured not to perform compression on the moving image data when the motion detection unit (13) detects that the motion is present, but to perform compression on the moving image data when the motion detection unit (13) detects that the motion is absent; and
a data transfer unit (15) configured to transfer the moving image data to a cloud storage (3).

2. The gateway device (1) according to claim 1, further comprising a plurality of capture units (11, 12) configured to alternately capture moving image data for a predetermined time from the moving image data input from the camera device (2) and to send the captured moving image data to the data processing unit (14).

3. The gateway device (1) according to claim 1 or 2, further comprising a temporary storage unit (16) configured to temporarily store the moving image data, wherein
the data transfer unit (15) is configured to store the moving image data in the temporary storage unit (16) when the moving image data cannot be transferred to the cloud storage (3) and to transfer the moving image data stored in the temporary storage unit (16) to the cloud storage (3) when it becomes possible to transfer the moving image data to the cloud storage (3).

4. The gateway device (1) according to claim 3, wherein the data transfer unit (15) is configured to store the moving image data in the temporary storage unit (16) by compressing the moving image data.

5. A computer program comprising instructions which, when the program is executed by a computer connected with a camera device, causes the computer to function as:
a snapshot unit (10) configured to acquire still image data at predetermined intervals from moving image data input from the camera device (2);
a motion detection unit (13) configured to detect a presence or absence of a motion, by difference extraction, from the still image data acquired by the snapshot unit (10);
a data processing unit (14) configured not to perform compression on the moving image data when the motion detection unit (13) detects that the motion is present, but to perform compression on the moving image data when the motion detection unit (13) detects that the motion is absent; and
a data transfer unit (15) configured to transfer the moving image data to a cloud storage (3).

6. A computer-readable recording medium on which the program according to claim 5 is recorded.

7. A method of transferring a camera image by a computer (4) connected with a camera device (2), the method comprising:
acquiring still image data at predetermined intervals from moving image data input from the camera device (2);
detecting a presence or absence of a motion, by difference extraction, from the still image data;
not performing compression on the moving image data when it is detected that the motion is present, but performing compression on the moving image data when it is detected that the motion is absent; and
transferring the moving image data to a cloud storage (3).

## Patentansprüche

1. Gateway-Vorrichtung (1), die mit einer Kameravorrichtung (2) verbindbar ist, mit:
einer Schnappschusseinheit (10), die so aufgebaut ist, dass sie Standbilddaten in vorgegebenen Intervallen aus von der Kameravorrichtung (2) eingegebenen Bewegtbilddaten erfasst;
einer Bewegungserfassungseinheit (13), die so aufgebaut ist, dass sie das Vorhandensein oder Fehlen einer Bewegung durch Differenzextraktion aus den von der Schnappschusseinheit (10) erfassten Standbilddaten erfasst;
einer Datenverarbeitungseinheit (14), die so aufgebaut ist, dass sie keine Komprimierung der Bewegtbilddaten durchführt, wenn die Bewegungserfassungseinheit (13) feststellt, dass die Bewegung vorhanden ist, aber eine Komprimierung der Bewegtbilddaten durchführt, wenn die Bewegungserfassungseinheit (13) feststellt, dass die Bewegung fehlt; und
einer Datenübertragungseinheit (15), die so aufgebaut ist, dass sie die Bewegtbilddaten zu einem Cloud-Speicher (3) überträgt.

2. Gateway-Vorrichtung (1) nach Anspruch 1, die ferner eine Vielzahl von Erfassungseinheiten (11, 12) umfasst, die so aufgebaut sind, dass sie abwechselnd Bewegungsbilddaten für eine vorbestimmte Zeit aus den von der Kameravorrichtung (2) eingegebenen Bewegungsbilddaten erfassen und die erfassten Bewegungsbilddaten an die Datenverarbeitungseinheit (14) senden.

3. Gateway-Vorrichtung (1) nach Anspruch 1 oder 2, die ferner eine Zwischenspeichereinheit (16) umfasst, die zum vorübergehenden Speichern der Bewegtbilddaten aufgebaut ist, wobei
die Datenübertragungseinheit (15) so aufgebaut ist, dass sie die Bewegtbilddaten in der temporären Speichereinheit (16) speichert, wenn die Bewegtbilddaten nicht an den Cloud-Speicher (3) übertragen werden können, und dass sie die in der temporären Speichereinheit (16) gespeicherten Bewegtbilddaten an den Cloud-Speicher (3) überträgt, wenn es möglich wird, die Bewegtbilddaten an den Cloud-Speicher (3) zu übertragen.

4. Gateway-Vorrichtung (1) nach Anspruch 3, wobei die Datenübertragungseinheit (15) so aufgebaut ist, dass sie die Bewegtbilddaten in der temporären Speichereinheit (16) speichert, indem sie die Bewegtbilddaten komprimiert.

5. Computerprogramm, das Anweisungen umfasst, die, wenn das Programm von einem Computer ausgeführt wird, der mit einer Kameravorrichtung verbunden ist, den Computer veranlassen, als Folgendes zu arbeiten:
eine Schnappschusseinheit (10), die so aufgebaut ist, dass sie Standbilddaten in vorbestimmten Intervallen aus von der Kameravorrichtung (2) eingegebenen Bewegtbilddaten erfasst;
eine Bewegungserfassungseinheit (13), die so aufgebaut ist, dass sie das Vorhandensein oder das Fehlen einer Bewegung durch Differenzextraktion aus den von der Schnappschusseinheit (10) erfassten Standbilddaten erfasst;
eine Datenverarbeitungseinheit (14), die so aufgebaut ist, dass sie keine Komprimierung der Bewegtbilddaten durchführt, wenn die Bewegungserfassungseinheit (13) feststellt, dass die Bewegung vorhanden ist, aber eine Komprimierung der Bewegtbilddaten durchführt, wenn die Bewegungserfassungseinheit (13) feststellt, dass die Bewegung fehlt; und
eine Datenübertragungseinheit (15), die so aufgebaut ist, dass sie die Bewegtbilddaten zu einem Cloud-Speicher (3) überträgt.

6. Computerlesbares Aufzeichnungsmedium, auf dem das Programm gemäß Anspruch 5 aufgezeichnet ist.

7. Verfahren zum Übertragen eines Kamerabildes durch einen Computer (4), der mit einer Kameravorrichtung (2) verbunden ist, wobei das Verfahren umfasst:
Erfassen von Standbilddaten in vorab festgelegten Intervallen aus Bewegtbilddaten, die von der Kameravorrichtung (2) eingegeben werden;
Erfassen des Vorhandenseins oder Fehlens einer Bewegung durch Differenzextraktion aus den Standbilddaten;
Nicht-Durchführen einer Kompression der Bewegtbilddaten, wenn festgestellt wird, dass die Bewegung vorhanden ist, aber Durchführen einer Kompression der Bewegtbilddaten, wenn festgestellt wird, dass die Bewegung fehlt; und
Übertragen der Bewegtbilddaten an einen Cloud-Speicher (3).

## Revendications

1. Dispositif passerelle (1) connectable à un appareil de prise de vue (2), comprenant :
une unité d'instantané (10) configurée pour acquérir des données d'image fixe à des intervalles prédéterminés à partir de données d'image mobile d'entrée de l'appareil de prise de vue (2) ;
une unité de détection de mouvement (13) configurée pour détecter une présence ou une absence de mouvement, par extraction de différence, à partir des données d'image fixe acquises par l'unité d'instantané (10) ;
une unité de traitement de données (14) configurée pour ne pas effectuer de compression sur les données d'image mobile lorsque l'unité de détection de mouvement (13) détecte que le mouvement est présent, mais pour effectuer une compression sur les données d'image mobile lorsque l'unité de détection de mouvement (13) détecte que le mouvement est absent ; et
une unité de transfert de données (15) configurée pour transférer les données d'image mobile vers un stockage en nuage (3).

2. Dispositif passerelle (1) selon la revendication 1, comprenant en outre une pluralité d'unités de capture (11, 12) configurée pour capturer alternativement des données d'image mobile à un temps prédéterminé à partir des données d'image mobile d'entrée du dispositif de prise de vue (2) et pour envoyer les données d'image mobile capturées à l'unité de traitement de données (14).

3. Dispositif passerelle (1) selon la revendication 1 ou 2, comprenant en outre une unité de stockage temporaire (16) configurée pour stocker temporairement les données d'image mobile, dans lequel
l'unité de transfert de données (15) est configurée pour stocker les données d'image mobile dans l'unité de stockage temporaire (16) lorsque les données d'image mobile ne peuvent pas être transférées vers le stockage en nuage (3) et pour transférer les données d'image mobile de l'unité de stockage temporaire (16) vers le stockage en nuage (3) lorsqu'il devient impossible de transférer les données d'image mobile vers le stockage en nuage (3).

4. Dispositif passerelle (1) selon la revendication 3, dans lequel l'unité de transfert de données (15) est configurée pour stocker des données d'image mobile dans l'unité de stockage temporaire (16) en compressant les données d'image mobile.

5. Programme informatique comprenant des instructions qui, lorsque le programme est exécuté par un ordinateur connecté à un appareil de prise de vue, fait que l'ordinateur fonctionne comme :
une unité d'instantané (10) configurée pour acquérir des données d'image fixe à des intervalles prédéterminés à partir de données d'image mobile d'entrée de l'appareil de prise de vue (2) ;
une unité de détection de mouvement (13) configurée pour détecter une présence ou une absence de mouvement, par extraction de différence, à partir des données d'image fixe acquises par l'unité d'instantané (10) ;
une unité de traitement de données (14) configurée pour ne pas effectuer de compression sur les données d'image mobile lorsque l'unité de détection de mouvement (13) détecte que le mouvement est présent, mais pour effectuer une compression sur les données d'image mobile lorsque l'unité de détection de mouvement (13) détecte que le mouvement est absent ; et
une unité de transfert de données (15) configurée pour transférer les données d'image mobile vers un stockage en nuage (3).

6. Support d'enregistrement lisible sur ordinateur sur lequel le programme selon la revendication 5 est enregistré.

7. Procédé pour transférer une image de caméra par un ordinateur (4) connecté à un dispositif de prise de vue (2), le procédé comprenant les étapes consistant à :
acquérir des données d'image fixe à des intervalles prédéterminés à partir de données d'image mobile d'entrée à partir du dispositif de prise de vue (2) ;
détecter la présence ou l'absence de mouvement, par extraction de différence, à partir des données d'image fixe ;
ne pas effectuer de compression sur les données d'image mobile lorsqu'il est détecté que le mouvement est présent, mais effectuer une compression sur les données d'image mobile lorsqu'il est détecté que le mouvement est absent ; et
transférer les données d'image mobile vers un stockage en nuage (3).
